# EUROPEAN PATENT SPECIFICATION

(11) **EP 0 392 446 B1**
(45) Date of publication and mention of the grant of the patent: **04.09.1996**
(21) Application number: 90106826.2
(22) Date of filing: 10.04.1990
(51) Int. Cl.: H04M 1/65

(54) **Communication terminal unit having an automatic answering function**
Kommunikationsendstelleneinheit mit einer automatischen Antwortfunktion
Terminal de communication ayant une fonction de répondeur automatique

(30) Priority: 10.04.1989 JP 89998/89
(43) Date of publication of application: 17.10.1990
(73) Proprietor: SHARP KABUSHIKI KAISHA, Osaka-shi Osaka 545 (JP)
(72) Inventor: Kakigi, Yoshihiro, Higashihiroshima-shi, Hiroshima-ken (JP)
(74) Representative: TER MEER - MÜLLER - STEINMEISTER & PARTNER

(56) References cited:
- DE-A- 3 705 678
- GB-A- 2 166 624
- US-A- 4 703 498
- PATENT ABSTRACTS OF JAPAN vol. 4, no. 36 (E-3)(518) 26 March 1980 & JP-A-55 6 924 (IWASAKI TSUSHINKE K. K.)

## Description

### BACKGROUND OF THE INVENTION

### Field of the Invention

The present invention relates to a communication terminal unit having an automatic answering function in accordance with the precharacterizing part of the independent claim 1. Such a communication terminal unit is known from DE-A-3 705 678.

### Description of the Background Art

A conventional communication terminal unit having an automatic answering function generally uses a semiconductor memory or a magnetic tape as a storage medium. In such a conventional communication terminal unit having an automatic answering function, an operation guidance message such as "now we are out; if you have any message, please say the message after a tone line 'pea"' is stored in advance in the storage medium so that the operation guidance message is transmitted to a telephone on the calling side each time the terminal unit receives a telephone call when the person on the receiving side is out. If the above mentioned storage medium is a magnetic tape, a communication message such as a voice message or facsimiled data transmitted from the telephone on the calling side in response to the above mentioned operation guidance message is stored in the magnetic tape and an end tone of a single frequency of about 1 KHz is recorded for one second at the end of the above mentioned communication message.

In order to reproduce the communication message thus stored by issuance of a control command using a dual tone multi-frequency (DTMF) signal from other telephone through a transmission line (this reproduction being referred to as reproduction in a remote control mode), the below described procedures are generally adopted.

First of all, a call is made to a communication terminal unit having an automatic answering function from another telephone. The communication terminal unit which receives the call catches the telephone line and transmits an operation guidance message to the telephone on the calling side. When a control command (such as "#" of a DTMF signal) is transmitted from the telephone on the calling side during the transmission of the operation guidance message, the communication terminal unit stops the transmission of the operation guidance message. After that, when a control command for reproduction of the communication message is issued from the telephone on the calling side, the communication terminal unit reproduces successively the stored communication messages, beginning with the first stored one. If the reproduced information is a voice message, it is received through the telephone on the calling side and when it is facsimiled data, it is received through the facsimile system on the calling side.

However, such a conventional communication terminal unit involves disadvantages that at the time of reproduction in the remote control mode, even if only the "n" th communication message is to be fetched or the communication message starting from the "n" th one are to be fetched successively, it is necessary to fetch also the first to the "n-1" th message since the reproduction is effected successively from the first stored communication message. For example, let us assume a case in which the user starts reproduction in the remote control mode to know what messages are received when he is out, from a place where he is now, and the first two messages are fetched. Further, it is assumed that the user instructs reproduction again in the remote control mode to know whether a new message was received thereafter and to fetch the third communication message. However, on that occasion, since the comminunication terminal unit reproduces the messages successively from the first stored one, the third message can be reproduced only after the reproduction of the first and second messages the user already heard, and it takes time to detect a start point of the newly received voice message or facsimiled data. In addition, in some terminal units, it is possible to instruct fast forwarding or rewinding by a control command in the above described case but it is not possible to determine in what position of the tape the new message is stored. Thus, such conventional units are not convenient for detecting the start point of the newly stored message.

Further, in the case of a unit using a semiconductor memory for storage of communication messages, reproduction in the remote control mode involves the same disadvantage as described above, in which the communication messages are reproduced successively from the first stored one.

The communication terminal unit known from DE-A-3 705 678 comprises a multi-function reproduction in a remote control mode, e.g. remotely controlled reproduction of all messages being recorded since switch on a telephone stand-by mode, the remotely controlled reproduction only of the newest messages, which has been received after the last remotely controlled reproduction or the repetition of the last reproduced five seconds. DE-A- 3 705 678 does not disclose particular means how to achieve the multiple functions of the remotely controlled reproduction mode.

### SUMMARY OF THE INVENTION

Therefore, an object of the present invention is to provide a communication terminal unit having an automatic answering function which enables a user to access only a desired communication message by remote control out of communication messages stored therein.

The communication terminal unit further has an automatic answering function comprising an automatic recording and reproducing apparatus capable of accessing rapidly by remote control a desired area out of communication messages stored in divided areas.

The automatic answering apparatus comprises a recording and reproduction apparatus where a communication message is recorded with a variable length for each time and which can access rapidly and accurately a desired communication message out of the recorded communication messages.

The automatic answering function also enables a user to fetch desired facsimiled data among stored facsimiled data by remote control when the user is out of his office or home.

Briefly stated, in order to accomplish the above described objects, the present invention includes a communication terminal unit having an automatic answering function including: a communication terminal apparatus having a transmitter connected to a transmission line for transmitting data and a receiver for receiving the data; and an automatic answering unit coupled to the communication terminal apparatus, for automatically answering a reception signal. The above mentioned automatic answering unit includes: a message signal generator responsive to the reception signal for transmitting a message signal to answer the reception signal; a data recorder for recording data from the above mentioned communication line subsequently to the transmission of the message signal; a device for storing communication number data for specifying a number of recording operation;
counting means for counting recording operation amount data indicating from which position and to which position of a recording medium the received data is recorded when said data recording means responsive to receipt of each call records the received data to the recording medium;
a device for storing operation amount data representing an operation amount of each number of storing operation of the data recorder; a device responsive to a communication number designation data signal received from the transmission line subsequently to the reception signal, for bringing the data recorder to a prescribed recording position based on the communication number data stored in the communication number data storing device and the recording operation amount data stored in the recording operation amount data storing device; and a device for enabling reproduction operation of the data recorder from the above mentioned prescribed recording position.

According to the present invention, the above described and other objects are accomplished in the below described manner. First of all, the user sets the terminal unit to an automatic answering mode as required. After that, when a reception signal is transmitted through the transmission line, a message signal for answering it is transmitted from the message answering device to the transmission line. When data is transmitted from a person making the call, it is recorded in the data recorder. The recording of the data and the number of reception of the data are stored in the communication number data storing device. Further, the recording operation amount for each reception of data is stored in the recording operation amount data storing means.

Then, when the user wants to access by remote control the data recorded in the recorder, he calls the communication terminal unit having the automatic answering function. The communication terminal unit having the automatic answering function drives the message generator in response to a reception signal and transmits the message to the communication line. When the unit receives the communication number designation data while the message is being transmitted, the device for setting the data recorder to the prescribed position searches for the communication number data stored in the communication number data storing means and the number of communication number designation data based on the recording operation amount data and sets the data recorder in the start position of that number.

Then, by means of the reproduction operation enabling device, the data of the designated number is reproduced from the start position.

Thus, the communication number designation data is transferred to the communication terminal unit having the automatic answering function by using a dual tone multi-frequency (DTMF) signal as a remote control signal from other telephone, whereby the data recorded in the data recorder can be selectively reproduced. Thus, necessary communication data can be fetched rapidly and easily, which makes the system more convenient to use.

If the data recorder is a magnetic tape recorder which records data on a magnetic tape, recording for a longer period can be made compared with a semiconductor memory device of the same cost.

In addition, if the device for setting the data recorder to the prescribed position includes a coincidence detector for detecting a coincidence between the number of the communication number designation data from the communication line and the number of the communication number data stored in the communication number data storing means and a start position detector for detecting a start position of the number detected by the coincidence detector based on the operation amount data of the operation amount data storing means, it is possible to detect rapidly and accurately the start position of the tape for the number corresponding to the number designation data applied from the user.

In addition, if the communication number data is decimal number data, it can be made to correspond to reception number data of the DTMF signal applied by dial operation of the user.

According to another aspect of the present invention, in facsimile communication, communication number data can be also stored in the communication number data storing device and the recording operation amount can be stored in the recording operation amount data recording device, whereby the facsimiled data of the required number can be fetched externally through the communication line.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram of a communication terminal unit having an automatic answering function according to an embodiment of the present invention.

Fig. 2 is a diagram for explaining recorded conditions of communication signals.

Fig. 3 is a flow chart of the communication terminal unit having the automatic answering function shown in Fig. 1.

### DESCRIPTION OF THE PREFERRED EMBODIMENTS

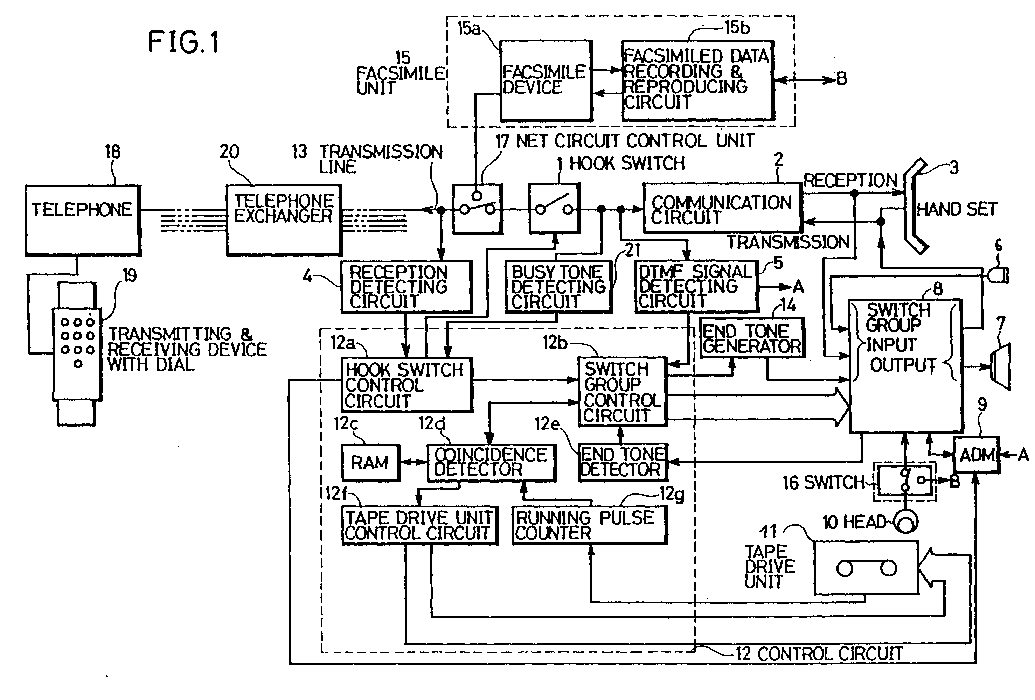

An embodiment of the present invention will be described in detail with reference to the drawings. Fig. 1 is a block diagram of a communication terminal unit having an automatic answering function according to the embodiment. Referring to Fig. 1, a telephone 18 transmits a DTMF signal to a communication line 13 in response to operation of a pushbutton dial 19. A telephone exchanger 20 selects a destination of reception in response to the DTMF signal and transmits a reception signal and the DTMF signal to a communication terminal unit having an automatic answering through the communication line 13.

A hook switch 1 connects the transmission line 13 to a communication circuit 2 after the reception. The communication circuit 2 is provided between the transmission line 13 and a hand set 3 to enable communication. The hand set 3 contains a microphone 6 and a speaker 7. A reception detecting circuit 4 detects the reception signal and applies a detection signal to a hook switch control circuit 12a of a control circuit 12. A busy tone detecting circuit 21 detects a busy tone transmitted through the transmission line 13 after an end of communication and supplies a detection signal to the hook switch control circuit 12a. A DTMF detecting circuit 5 detects the DTMF signal (such as a calling instruction or a communication number designation instruction of a communication message) transmitted through the transmission line 13. The microphone 6 is used to record an operation guidance message. The speaker 7 is used to convert a communication signal to a voice. A switch group 8 is operated in response to a signal from a switch group control circuit 12b to provide an input signal from a receiving circuit of the communication circuit 2, the microphone 6, an end tone generating circuit 14, a head 10 or an operation guidance message generating circuit 9 to the corresponding one of a transmitting circuit of the communication circuit 2, the speaker 7, the head 10 or the operation guidance message generating circuit 9. (In this case, it does not happen that the output from the head 10 is supplied to the same head or the output from the operation guidance message generating circuit 9 is supplied to the same circuit 9).

The operation guidance message generating circuit 9 stores the operation guidance message inputted from the microphone 6 or the like and reproduces the operation guidance message in response to a signal from the hook switch control circuit 12a of the control circuit 12.

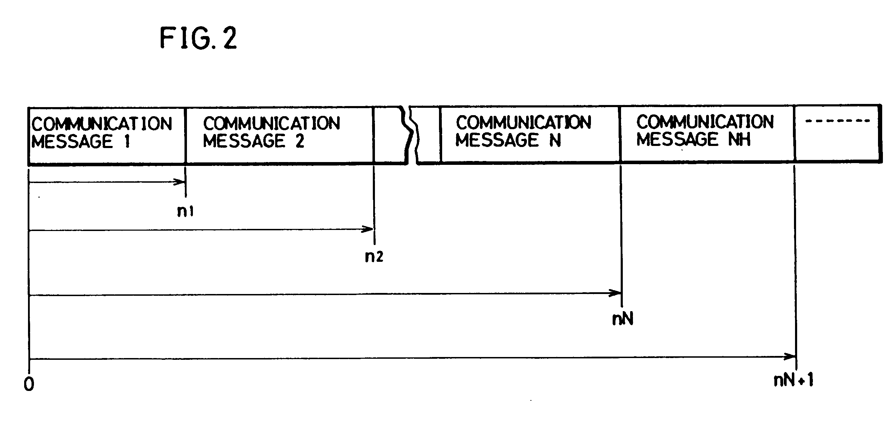

The head 10 is used to effect recording and reproduction of a magnetic tape. A tape drive unit 11 rewinds or fast forwards the magnetic tape or sets the tape in a reproduction state in response to a signal from a tape drive unit control circuit 12f, and generates a pulse (hereinafter referred to as a running pulse) each time a hub of the tape rotates by 1/4 of a turn. The end tone generating circuit 14 generates a single frequency of about 1 KHz. A facsimile unit 15 has a facsimile device 15a which reads a facsimiled document, prints facsimiled data and communicates data in facsimile, and a facsimiled data recording and reproducing circuit 15b which records and reproduces facsimiled data in and from the magnetic tape. The switch 16 connects the head to the switch group 8 when a message is recorded in the tape and to the facsimiled data recording and reproducing circuit 15b when the facsimiled data is recorded. A net circuit control unit 17 connects the transmission line 13 to the facsimile unit 15 in the case of facsimile communication and to the hook switch 1 in other cases. The above mentioned control circuit 12 comprises: the hook switch control circuit 12a, the switch group control circuit 12b, a RAM 12c for storing a communication number and an end position of each end of communication, a coincidence detecting circuit 12d for setting a reproduction position to a position designated in response to communication number designation data included in the DTMF signal from the telephone 18, the end tone detecting circuit 12e, the tape drive unit control circuit 12f as the reproducing circuit, and a running pulse count circuit 12g. The hook switch control circuit 12a closes the hook switch 1 in response to the reception signal from the reception detecting circuit 4, or instructs reproduction of the operation guidance message in the operation guidance message generating circuit 9, or applies a signal to the switch group control circuit 12b. The switch control circuit 12b applies a signal to the switch group 8 and controls the flow of signals. If the RAM 12c is a memory which stores as a decimal number the recording number data of communication messages and stores count values (n1, n2, ... nN, nN+1) of tape positions where the end tone is recorded, namely, recording operation data as shown in Fig. 2. The coincidence detecting circuit 12d compares a count value stored in the RAM 12c with a counter value outputted from the running pulse count circuit 12g and supplies a signal to the tape drive unit control circuit 12f and the switch group control circuit 12b. The end tone detecting circuit 12e detects the above mentioned end tone and supplies a signal to the switch group control circuit 12b. The tape drive unit control circuit 12f supplies a signal to the tape drive unit 11 to fast forward or rewind the tape or to set the tape in the reproduction state. The running pulse count circuit 12g counts upward the running pulses outputted from the tape drive unit 11 when the tape is being fast forwarded or reproduced, and counts downward the pulses when the tape is being rewound.

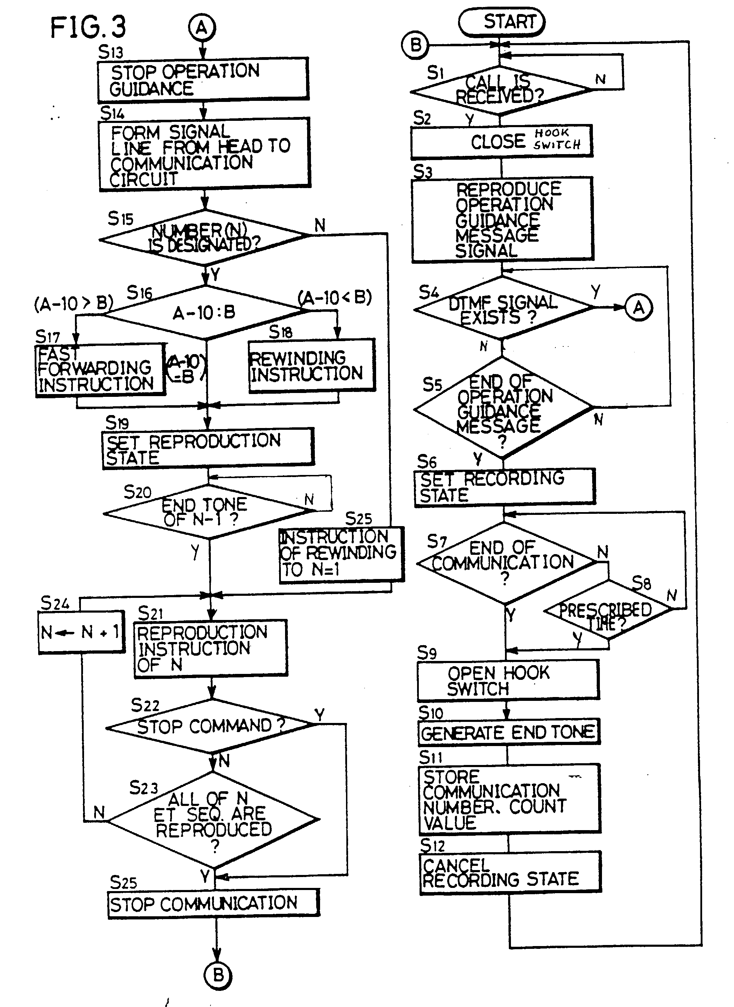

Fig. 3 is a flow chart of the communication terminal unit having the automatic answering function shown in Fig. 1. Referring to Fig. 3, operation of the communication terminal unit will be described.

First of all, operation of recording a communication message in an automatic answering mode of communication will be described.

When a call is received in the automatic answering mode, the reception detecting circuit 4 detects the call (in step S1). When a prescribed number of ringing tones (for example, four ringing tones) are detected, a signal is applied to the hook switch control circuit 12a. The hook switch control circuit 12a closes the switch 1 in response to the signal and applies a signal to the switch group control circuit 12b (in step S2). An instruction is issued to the operation guidance message generating circuit 9 to reproduce the operation guidance message (in step S3). In this case, it is assumed that the operation guidance message has been recorded in the operation guidance message generating circuit 9 by means of the microphone 6. The switch group control circuit 12b controls the switch group 8 to transmit the reproduced operation guidance message to the communication circuit 2, so that the operation guidance message is transmitted to the transmission line 13. When the transmission of the operation guidance message is terminated, the switch group control circuit 12b controls the switch group 8 to transmit the signal from the receiving circuit of the communication circuit 2 to the head 10. At the same time, the tape drive unit control circuit 12f supplies a signal to the tape drive unit 11 to set the tape in a recording state (in steps S4 to S6). After that, a communication message transmitted from the transmission line 13 is recorded. When a prescribed time for recording the communication message has passed, or when the person on the calling side terminates the call and a busy tone detection signal is transmitted from the busy tone detecting circuit 21, the elapse of the prescribed time or the transmission of the detection signal is detected (in steps S7, S8). Then, the hook switch control circuit 12a opens the hook switch 1 (in step S9) and the switch group control circuit 12b switches the input to the end tone generating circuit 14 (in step S10) (the output being kept connected to the head 10). The end tone generating circuit 14 generates the end tone for one second and the end tone is recorded in the tape. The RAM 12c stores the count value of the running pulse count circuit 12g and the communication number at that time (in step S11). The count value of the running pulse count circuit 12g starts from 0 which corresponds to a leading edge of the tape. Therefore, before the automatic answering mode is set, the tape is rewound to its leading edge and the count value is reset to 0. On this occasion, if several messages have been already recorded, the tape is fast forwarded to a point corresponding to the end tone of the message recorded latest, so that the tape is prepared for recording of the next communication message. When the end tone is recorded, the tape drive unit control circuit 12f stops the tape and cancels the recording state (in step S12).

In the case of recording a communication message of facsimiled data, when the facsimiled communication is detected after the call reception is detected and the line is caught, the net circuit control unit 17 connects the transmission line 13 to the facsimile unit 15 and the switch 16 connects the head 10 to the facsimiled data recording and reproducing circuit 15b. The communication message of the facsimiled data passes through this route and is recorded in the tape. When the facsimile communication is terminated, the net circuit control unit 17 connects the transmission line 13 to the hook switch 1 and the switch 16 connects the head 10 to the switch group 8. Subsequently, the end tone is recorded and the count value is stored as described previously.

Next, operation of reproducing a communication message in the remote control mode will be described.

It is assumed that several communication messages have been recorded in the tape as described above. When a call is received in this state, the operation guidance message is transmitted as described above (in steps S1 to S3). If a control command (for example "#" as the DTMF signal) is transmitted to start the remote control mode through the transmission line 13 while the operation guidance message is being transmitted, the detecting circuit 5 detects the control command (in step S4) and instructs the operation guidance message generating circuit 9 to stop the reproduction of the operation guidance message (in step S13). At the same time, a signal is applied to the switch group control circuit 12b, so that the switch group control circuit 12b operates the switch group to form a signal path for transmission from the head 10 to the communication circuit 2 (in step S14). Next, in step S15, when a control command (for example "3", "*", "1", "#" as the DTMF signal) is transmitted to reproduce the Nth communication message from the transmission line 13, the switch group control circuit 12b connects the output temporarily to nowhere and detects a start point of the Nth message. More specifically, the coincidence detecting circuit 12d compares a value obtained by subtracting 10 from the count value at the tape position where the end tone of the (N-1) th communication message is recorded in the RAM 12c (namely A-10 in Fig. 3) with the count value (B in Fig. 3) of the running pulse count circuit 12g (in step S16) and determines whether the tape is to be rewound or to be fast forwarded, whereby a signal is applied to the tape drive unit control circuit 12f (in steps S17, S18). Consequently, the tape drive unit control circuit 12f carries out rewinding or fast forwarding of the tape. When the value obtained by subtraction of 10 from the count value from the RAM 12c coincides with the count value of the running pulse count circuit 12g, the coincidence detecting circuit 12d detects the coincidence and the tape drive unit control circuit 12f sets the tape in the reproduction state (in step S19). The end tone detecting circuit 12e operates to detect the end tone of the (N-1) th message (in step 20) and when it is detected, which means that the start point of the Nth message is ready to be reproduced, the switch group control circuit 12b connects the output to the transmitting circuit of the communication circuit 2. Thus, the third communication message is reproduced (in step S21) and it is transmitted to the transmission line 13. Subsequently, all the communication messages after the Nth message are reproduced until a communication message reproduction stop command is transmitted through the transmission line 13 (in steps S22, S23, S24) and when the reproduction of all messages is completed, the transmission of the messages is stopped (in step S25). After the processing in step S25, the program returns to step S1.

Reproduction of a communication message or facsimiled data will be described in the following. In the same manner as in the case of a voice communication message, the remote control mode is started and when a control command (for example, "3", "*", "5", "1" or "#" as the DTMF signal) is transmitted to reproduce the Nth communication message of facsimiled data through the transmission line 13, the net circuit control unit 17 connects the transmission line 13 to the facsimile unit 15 and searches for a start point of the Nth communication message of the facsimiled data in the same manner as in the case of a voice communication message. If the start point is set ready, the switch 16 connects the head 10 to the facsimiled data recording and reproducing circuit 15b, so that the facsimiled data is read out through this route. When the reproduction of the communication message of the facsimiled data is terminated, the switch 16 connects the head 10 to the switch group 8. Further, when the facsimile communication is terminated, the net circuit control unit 17 connects the communication line 13 to the hook switch 1.

In order to prevent reproduction of the communication message by an unrelated person, a secret number (such as a number "1, 2, 3, #" after "#") may be required when the remote control mode is to be started in the answering mode, so that the remote control mode may not be started until input of the secret number.

Thus, the recorded information can be selectively reproduced by using a signal such as the DTMF signal applied from other telephone and it is possible to fetch necessary information rapidly and easily without reproducing unnecessary information as in the prior art. Thus, the terminal unit according to the present invention becomes more convenient to use.

Although the above described embodiment has the facsimile unit, a communication terminal unit having an automatic answering function without a facsimile unit may be provided. In such a case, the facsimile unit 15, the switch 16 and the net circuit control unit 17 are not required, and the transmission line 13 is directly connected to the switch 1 and the head 10 is directly connected to the switch group 8.

Although the present invention has been described and illustrated in detail, it is clearly understood that the same is by way of illustration and example only and is not to be taken by way of limitation.

## Claims

1. A communication terminal unit having an automatic answering function comprising: a communication terminal apparatus including transmitting means connected to a transmission line where a telephone signal including a dial signal, a call reception signal and data is transmitted, for transmitting the data to said transmission line, and receiving means for receiving the data from said transmission line; and an automatic answering unit coupled to said communication terminal apparatus for automatically answering the call reception signal from said transmission line, said automatic answering unit comprising:
message signal generating means (9) responsive to the call reception signal from said transmission line for transmitting a message signal as an answer to said transmission line;
data recording means (10, 11, 12f) for recording the data received from said transmission line subsequently to the transmission of the message signal from said message signal generating means;
**characterized by**
means for storing (12, 12c) communication number data for specifying a number of recording operation of said data recording means responsive to reception of each call;
counting means (12g) for counting recording operation amount data indicating from which position and to which position of a recording medium the received data is recorded when said data recording means responsive to receipt of each call records the received data to the recording medium;
means (12c) for storing recording operation amount data as counted by said counting means (12g) representing an operation amount of recording operation of said data recording means responsive to reception of each call;
means (12f, 12g, 12d, 12e) responsive to a communication number designation data signal received from said transmitting line subsequent to the call reception signal from said transmission line, for setting said data recording means to a prescribed recording position based on the communication number data stored in said communication number data storing means (12, 12c) and the recording operation amount data stored in said recording operation amount storing means (12c); and
means (22f) for starting reproduction operation of said data recording means from said prescribed recording position.

2. The communication terminal unit in accordance with claim 1, wherein the data recorded in said data recording means (10, 11, 12f) includes communication data and Facsimile data.

3. The communication terminal unit in accordance with claims 1 or 2, wherein said data recording means (10, 11, 12f) is magnetic tape recording means for recording the data on a magnetic tape.

4. The communication terminal unit in accordance with one of the claims 1 to 3, wherein said communication number data storing means (12, 12c) stores decimal number data as the communication number data.

5. The communication terminal unit in accordance with any one of the preceding claims, wherein said recording operation amount data storing means (12c) is a RAM.

6. The communication terminal unit in accordance with claim 1, wherein said means for setting said data recording means to the prescribed position comprises
coincidence detecting means (12d) for detecting a coincidence between the number of the communication number designation data from said transmission line and the communication number data stored in said communication number data storing means (12, 12c), and
start position detecting means for detecting a start position of the number detected by said coincidence detecting means based on the stored recording operation amount data.

## Patentansprüche

1. Kommunikationsendstelleneinheit mit einer automatischen Antwortfunktion, wobei die Endstelleneinheit aufweist:
ein Kommunikationsendstellengerät, das eine Sendeeinrichtung, die mit einer Übertragungsleitung verbunden ist, über die ein Telefonsignal einschließlich eines Wählsignals, eines Ruf-/Empfangssignals und Daten übertragen werden, um diese Signale auf die Übertragungsleitung zu senden und eine Empfangseinrichtung für den Empfang der Daten von der Übertragungsleitung enthält; und
eine mit einem Kommunikationsendstellengerät gekoppelte automatische Antworteinheit zur automatischen Beantwortung des Ruf-/Empfangssignals von der Übertragungsleitung, wobei die automatische Antworteinheit aufweist:
eine Nachrichtensignalerzeugungseinrichtung (9), die auf das Rufempfangssignal der Übertragungsleitung anspricht und als Antwort ein Nachrichtensignal zur Übertragungsleitung sendet;
eine Datenaufzeichnungseinrichtung (10, 11, 12f) für die Aufzeichnung der von der Übertragungsleitung empfangenen Daten nach dem Senden des Nachrichtensignals von der Nachrichtensignalerzeugungseinrichtung;
**gekennzeichnet durch**
eine Einrichtung (12, 12c), die Kommunikationsnummerndaten speichert, welche eine Nummer einer Aufzeichnungsoperation der Datenaufzeichnungseinrichtung in Reaktion auf jeden Rufempfang kennzeichnen;
eine Zähleinrichtung (12g), die Aufzeichnungsoperationsmengendaten zählt, die angeben, von welcher Position bis zu welcher Position eines Aufzeichnungsmediums die Empfangsdaten aufgezeichnet werden, wenn die Datenaufzeichnungseinrichtung auf jeden Rufempfang die empfangenen Daten auf dem Aufzeichnungsmedium aufzeichnet;
eine Einrichtung (12c), die die von der Zähleinrichtung (12g) gezählten Aufzeichnungsoperationsmengendaten speichert, die eine Operationsmenge der von der Datenaufzeichnungseinrichtung auf jeden Rufempfang ausgeführten Aufzeichnungsoperation darstellt;
eine Einrichtung (12f, 12g, 12d, 12e), die in Reaktion auf ein von der Übertragungsleitung nach dem Rufempfangssignal empfangenes Kommunikationsnummernbezeichnungsdatensignal die Datenaufzeichnungseinrichtung auf eine vorgeschriebene Aufzeichnungsposition setzt und zwar basierend auf den in der Kommunikationsnummerndatenspeichereinrichtung (12, 12c) gespeicherten Kommunikationsnummerndaten und den in der Aufzeichnungsoperationsmengenspeichereinrichtung (12c) gespeicherten Aufzeichnungsoperationsmengendaten; und
eine Einrichtung (12f), die eine Wiedergabeoperation der Datenaufzeichnungseinrichtung ab der vorgeschriebenen Aufzeichnungsposition startet.

2. Kommunikationsendstelleneinheit nach Anspruch 1, bei der die in der Datenaufzeichnungseinrichtung (10, 11, 12f) gespeicherten Daten Kommunikations- und Faksimiledaten enthalten.

3. Kommunikationsendstelleneinheit nach Anspruch 1 oder 2, bei der die Datenaufzeichnungseinrichtung (10, 11, 12f) ein Magnetbandaufzeichnungsgerät zur Aufzeichnung der Daten auf Magnetband ist.

4. Kommunikationsendstelleneinheit nach einem der Ansprüche 1 bis 3, bei der die Kommunikationsnummerndatenspeichereinrichtung (12, 12c) Dezimalzahlen als Kommunikationsnummerndaten speichert.

5. Kommunikationsendstelleneinheit nach einem der vorangehenden Ansprüche, bei der die die Aufzeichnungsoperationsmengendaten speichernde Einrichtung (12c) ein RAM ist.

6. Kommunikationsendstelleneinheit nach Anspruch 1, bei der die Einrichtung, die die Datenaufzeichnungseinrichtung auf die vorgegebene Position setzt, aufweist
Koinzidenzerfassungsmittel (12d) für die Erfassung einer Koinzidenz zwischen der Nummer der Kommunikationsnummernbezeichnungsdaten von der Übertragungsleitung und den Kommunikationsnummerndaten, die in der Kommunikationsnummerndatenspeichereinrichtung (12, 12c) gespeichert sind, und
Startpositionserfassungsmittel für die Erfassung einer Startposition der von den Koinzidenzerfassungsmitteln erfaßten Nummer, basierend auf den gespeicherten Aufzeichnungsoperationsmengendaten.

## Revendications

1. Unité de terminal de communication possédant une fonction de réponse automatique comprenant : un dispositif formant terminal de communication comprenant des moyens d'émission raccordés à une ligne de transmission par laquelle un signal téléphonique comprenant un signal de numérotation, un signal de réception d'appel et des données sont transmis, pour la transmission des données à ladite ligne de transmission, et des moyens de réception pour recevoir des données provenant de ladite ligne de transmission; et une unité de réponse automatique couplée au dispositif formant terminal de communication pour répondre automatiquement au signal de réception d'appel provenant de ladite ligne de transmission, ladite unité de réponse automatique comprenant :
des moyens (9) de production de signal de message aptes à répondre au signal de réception d'appel provenant de ladite ligne de transmission pour transmettre un signal de message en tant que réponse, à ladite ligne de transmission;
des moyens de réception de données (10,11,12f) pour enregistrer les données reçues de ladite ligne de transmission à la suite de la transmission du signal de message provenant desdits moyens de production de signal de message;
caractérisée par
des moyens (12,12c) pour mémoriser des données de numéro de communication pour spécifier un numéro d'opération d'enregistrement desdits moyens d'enregistrement de données en réponse à la réception de chaque appel;
des moyens de comptage (12g) pour compter des données de quantité d'opérations d'enregistrement indiquant à partir de quelle position et jusqu'à quelle position d'un support d'enregistrement les données reçues sont enregistrées lorsque lesdits moyens d'enregistrement de données en réponse à la réception de chaque appel enregistrent les données reçues, sur le support d'enregistrement;
des moyens (12c) pour mémoriser des données de quantité d'opérations d'enregistrement telles qu'elles sont comptées par lesdits moyens de comptage (12g) et qui représentent une quantité d'opérations d'enregistrement desdits moyens d'enregistrement de données en réponse à la réception de chaque appel;
des moyens (12f,12g,12d,12e) aptes à répondre à un signal de données de désignation de numéro de communication reçu de ladite ligne de transmission à la suite du signal de réception d'appel provenant de ladite ligne de transmission, pour régler lesdits moyens d'enregistrement de données dans une position d'enregistrement prescrite sur la base des données de numéro de communication mémorisées dans lesdits moyens (12,12c) de mémorisation des données de numéro de communication et les données de quantité d'opérations d'enregistrement dans lesdits moyens (12c) de mémorisation de la quantité d'opérations d'enregistrement; et
des moyens (22f) pour faire démarrer l'opération de reproduction desdits moyens d'enregistrement de données à partir de ladite position d'enregistrement prescrite.

2. Unité de terminal de communication selon la revendication 1, dans laquelle les données enregistrées dans lesdits moyens d'enregistrement de données (10,11,12f) incluent des données de communication et des données de fac-similé.

3. Unité de terminal de communication selon les revendications 1 ou 2, dans laquelle lesdits moyens d'enregistrement de données (10,11,12f) sont des moyens d'enregistrement à bande magnétique pour l'enregistrement des données sur une bande magnétique.

4. Unité de terminal de communication selon l'une des revendications 1 à 3, dans laquelle lesdits moyens (12,12c) de mémorisation de données de numéro de communication mémorisent des données décimales de numéro en tant que données de numéro de communication.

5. Unité de terminal de communication selon l'une quelconque des revendications précédentes, dans laquelle lesdits moyens (12c) de mémorisation de données de quantité d'opérations d'enregistrement sont une mémoire RAM.

6. Unité de terminal de communication selon la revendication 1, dans laquelle lesdits moyens pour régler lesdits moyens d'enregistrement de données sur la position prescrite comprennent
des moyens de détection de coïncidence (12d) pour détecter une coïncidence entre le nombre de données de désignation de numéro de communication provenant de ladite ligne de transmission et de données de numéro de communication mémorisées dans lesdits moyens (12,12a) de mémorisation de données de numéro de communication, et
des moyens de détection de position de départ pour détecter une position de départ du numéro détecté par lesdits moyens de détection de coïncidence, sur la base des données de quantité d'opérations d'enregistrement mémorisées.
